(19) Europäisches Patentamt
European Patent Office
Office européen des brevets

(11) **EP 4 235 203 A1**

(12) **EUROPEAN PATENT APPLICATION**

(43) Date of publication:
**30.08.2023 Bulletin 2023/35**

(21) Application number: **23157435.1**

(22) Date of filing: **20.02.2023**

(51) International Patent Classification (IPC):
*G01S 3/02* (2006.01)     *G01S 5/02* (2010.01)
*G01S 5/04* (2006.01)

(52) Cooperative Patent Classification (CPC):
**G01S 5/0278; G01S 5/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.02.2022 DE 102022104258**

(71) Applicant: **Airbus Defence and Space GmbH 82024 Taufkirchen (DE)**

(72) Inventors:
• **KRACH, Bernhard**
  **82024 Taufkirchen (DE)**
• **MEHLING, Marco**
  **82024 Taufkirchen (DE)**

(74) Representative: **LKGLOBAL Lorenz & Kopf Patentanwalt Attorney at Law PartG mbB Brienner Straße 11 80333 München (DE)**

(54) **METHOD FOR A MULTI-DOMAIN GEOLOCALIZATION**

(57) A method is proposed for determining positions of n target objects, each emitting electromagnetic signals, by m spatially distributed observers, the method comprising: carrying out direction-finding measurements by each of the m observers with respect to at least a part of the n targets, collecting the direction-finding measurements by one of the m observers or an external evaluation unit, ascertaining a geometric probability distribution from each of the direction-finding measurements in a partial map, combining the partial maps in order to generate a plurality of possible hypotheses, adding up the possible hypotheses with a respective weighting to form an overall map in order to obtain a marginalized probability distribution that takes all hypotheses into account, and eliminating, step-by-step, hypotheses that are incompatible with the marginalized probability distribution.

Fig. 1

EP 4 235 203 A1

## Description

## Technical Field

The present description relates to a method and a system for determining positions of n target objects, each emitting electromagnetic signals, by m spatially distributed observers.

## Technical background

Modern wireless communication devices can comprise transmitters that emit transmission pulses spread over a wide frequency spectrum and use fast changes of a transmission frequency, a pulse train frequency and a pulse shape. If a localization of the transmitter in question locally is desired, conventional localization and fusion algorithms that use the received parameters such as transmission frequency, pulse width, pulse repetition rate or pulse train frequency as a criterion for fusion face great challenges, in particular in a dense signal environment in which multiple transmitters of the same type are located.

US 2004 164 902 A1 discloses a method and a system for direction finding by using a probabilistic mapping. A system employs a technology for receiving data sets (bearing lines) from bearing receivers and for characterizing these signals with their respective error probabilities.

US 2010 138 184 A1 discloses a system and a method for indicating the position of a transmitter, wherein the system comprises a plurality of receivers at different positions in a field. A processor generates a probability map that indicates an approximation to a probability as a function of the transmitter position in the field.

The object of the invention can be considered that of proposing a method and a system for locating and determining the number of multiple frequency-agile transmitters of the same type in a dense signal environment without requiring signal parameters.

This object is achieved by the subject matter of independent claim 1. Advantageous embodiments are evident from the dependent claims and the following description.

A method is proposed for determining positions of n emitters from target objects, each emitting electromagnetic signals, by m spatially distributed receivers of observers, each receiving the electromagnetic signals, the method comprising: carrying out direction-finding measurements by each of the receivers with respect to at least a part of the emitters in order to obtain a respective direction-finding measurement result, collecting the direction-finding measurement results by one of the observers or an external evaluation unit, ascertaining for each receiver a respective geometric probability distribution of bearings of emitters from the direction-finding measurement results of all receivers in order to form a respective partial map for each of the receivers, combinatorially multiplying the partial maps in order to generate a plurality of possible hypotheses of positions of the emitters, adding up all generated hypotheses with a respective weighting to form an overall map in order to obtain a marginalized probability distribution that takes all hypotheses into account, and eliminating, step-by-step, hypotheses that are incompatible with the marginalized probability distribution in order to generate a result map.

Direction-finding measurements can be carried out in the individual observers by known direction-finding methods. The receivers can comprise suitable directional or direction-finding antennas, for instance having a phase-controlled antenna group comprising a number of sensors, having a dipole antenna, having a Doppler antenna or having another suitable device. The directional or direction-finding antenna has a signal processing device, which obtains a signal received by the antenna and estimates the direction of the emitter therefrom. If the above-mentioned antenna group is used, for example, an angle from which the signal arrives could be estimated by evaluating a time or frequency difference at the individual sensors of the antenna group. Antennas of other types could be rotated during the direction-finding measurement in order to evaluate changes over time of the respectively received signal that occur during the rotation, and to estimate an angle therefrom.

In order to be able to generate an inference regarding the positions of the emitters from this, the direction-finding measurement results are first collected in a computing unit. The computing unit then has the entirety of the direction-finding measurement results of all receivers at its disposal. It is not always necessary to wait for the reception of all direction-finding measurement results before the method is continued after the collecting. Instead, the method could also be continued to completion dynamically after reception of the first data, in order then to be run again for updating after reception of further or updated data. The computing unit could be implemented in one of the observers or in the form of an external evaluation unit.

The direction-finding measurement results could comprise spatial angle data indicating a direction from a position of the receiver in question to the emitter in question. A direction-finding measurement result could typically be represented as a bearing line that leads as an imaginary line from the observer to the target object in question. For moving target objects or moving observers, the bearing lines are not rigid, but change continuously depending on the movement. Furthermore, the individual bearing lines are not necessarily sharply delimited, but can have a fuzziness and consequently can be spread out within certain limits or describe a cone. The fuzziness can be caused by ambient conditions such as terrain shapes, weather, sensor precision, obstacles between the emitter and the receiver and by other features. Each receiver can carry out multiple direction-finding measurements. From these measurements, on the basis of a statistical measurement model for example, the likelihood function is calculated, which is expressed in the form of a probability distribution in a partial map in positional coordinates. This could be achieved, for example, on the basis of the following formula:

$$p\big(y_q|\mathbf{x}\big) = \frac{1}{\sqrt{2\pi\sigma_q^2}} e^{\left\{-\frac{[y_q-\theta_b(\mathbf{x})]^2}{2\sigma_q^2}\right\}}$$

where:

| | |
|---|---|
| $p$ | probability distribution of the direction-finding measurement |
| $\sigma^2$ | variance |
| $q$ | direction-finding measurement |
| $y_q$ | angle from the direction-finding measurement (q) |
| $b$ | observer or receiver |
| $\theta_b$ | angle function of the direction-finding measurements for receiver b |
| $\mathbf{x}$ | positional coordinates |

The geometric probability distribution can form, in particular, a Gaussian distribution. As explained in detail below, possible intersection points, and therefore hypothetical positions of target objects, can be ascertained, at least computationally, from the combination of all direction-finding measurement results of all receivers. A hypothetical position of this kind is moreover always referred to below as a hypothesis. The method according to the invention is characterized in that probability-theoretical models according to the Bayesian estimation theory are used to determine the actual positions of the emitters therefrom. The possible hypotheses are determined on the basis of the following equation:

$$p(\mathbf{y}_k|\mathbf{x}) \, \alpha \prod_{q=1}^{Q_k} p\big(y_q|\mathbf{x}\big)$$

where:

| | |
|---|---|
| $p$ | probability distribution of the combined direction-finding measurements |
| $Q_k$ | number of measurements considered |
| $q$ | respective direction-finding measurement |
| $y_q$ | angle from the direction-finding measurement (q) |
| $\mathbf{y}_k$ | vector of the angles of all direction-finding measurements ($y_q$), q = 1,...,$Q_k$ considered |
| $\mathbf{x}$ | positional coordinates |

The individual partial maps associated with the respective hypotheses, with the bearing angles or similar direction-finding measurement results contained therein, are subsequently combined with every other one of these partial maps. A plurality of possible hypotheses arise from this - determined by the number of permutations, which significantly increases with the number of receivers and direction-finding measurements.
All hypotheses generated are added up on the basis of the following equation to form an overall map:

$$p(\mathbf{x}|\mathbf{y}) = \sum_{k=1}^{M} w_k \, p(\mathbf{y}_k|\mathbf{x})$$

where:

| | |
|---|---|
| $p$ | probability distribution of the positional coordinates (x) |
| $M$ | number of hypotheses |
| $k$ | respective hypothesis |
| $w_k$ | weighting factor of the respective hypothesis |
| $\mathbf{y}$ | vector of the angles of all direction-finding measurements ($\mathbf{y}_k$), k = 1,...,M considered |

During the performance of the method, receivers can always be added or removed; accordingly, for incoming data in the form of direction-finding measurement results, additional hypotheses can always be added to the overall map or existing hypotheses can be updated, so that the position ascertainments can be refined. The method can thus respond completely dynamically to changing data sources and thereby continuously improve the position ascertainments.
When the individual hypotheses are being added up, they must be subjected to a weighting. This means that each hypothesis is multiplied by a weighting factor. The weighting can be based on different strategies. In a dynamic environment with multiple moving target objects, for example, a higher weight can always be placed on the most recent direction-finding measurement results. This takes account of situations in which, for example, a direction-finding measurement is outdated at the time of said addition, or is transmitted with a delay due to connection faults of one of the observers. Furthermore, the weighting could also be made dependent on the type of the corresponding receiver. If the target objects are watercraft or terrestrial vehicles for instance, and if one of the observers is an unmanned aerial vehicle flying at a great height, for example, a greater weight could be placed on other terrestrial vehicles or watercraft, which are closer to the target object and it can therefore be assumed that more precise measurements can be carried out there. Furthermore, hypotheses that take more direction-finding measurements into account than others could be weighted higher.
Finally, the incorrect hypotheses are eliminated from the marginalized probability distribution. For this purpose, the hypotheses are subjected to a plausibility check. It is particularly advantageous to select from the hypotheses that hypothesis associated with the highest probability. All the bearings associated with the relevantmost probable hypothesis, i.e. all permutations linked thereto having lesser probability, can be excluded. Such a selection can be carried out repeatedly until all incorrect hypotheses have been eliminated. The result of this selection process is then the set of correct hypotheses, which are formed by the respectively most probable hypothesis of each selection step. The resulting result map containing the probability distributions of all correct hypotheses can then be generated by adding up the individual correct hypotheses. Such a result map could be generated in the form of a heat map for instance.

The method according to the invention offers the possibility of localizing multiple emitters of the same type, including frequency-agile emitters, and determining the number thereof. No signal parameters are required for this; instead, a type classification on a higher level is sufficient.

In one advantageous embodiment, the marginalized probability distribution is formed from direction-finding measurements with respect to emitters of the same type. The direction-finding measurements consequently always relate to the same type of emitters, so that it is out of the question that the positions of different emitters are combined in a common probability distribution and falsify the result. It is conceivable, however, and makes sense to generate a separate probability distribution for each emitter type, which can be displayed in a common display.

In one advantageous embodiment, the method generates a respective result map for emitters of multiple types, wherein the multiple result maps are selectively overlaid so that the multiple result maps can be displayed jointly to a user. The overlaying could comprise the superposition of image information items, i.e. image information items from different result maps are added to one another and displayed on a single display. A user at a display unit could, for example, select or deselect individual emitter types by means of selection fields, so that the associated probability distributions are displayed. Emitter types can be, for example, radars of different designs with different performance features.

In one advantageous embodiment, the partial maps each comprise bearing lines which are formed from the direction-finding measurement results of the receivers and are directed to at least a part of the emitters, wherein the possible hypotheses comprise intersection point of all bearing lines with one another. For ordinary direction-finding measurements, each of which leads to a bearing line, a possible hypothesis could be correlated with an intersection point of two bearing lines. For a set of m receivers and n emitters, this could result computationally in up to m·n intersection points in space. In a particularly simple case with merely a single emitter and two receivers, an at least approximate spatial intersection point of the bearing lines, at which the target object is presumed to lie, can be formed from the totality of the bearing lines, and the individual hypothesis formed therefrom could be a correct hypothesis. For larger numbers of emitters and receivers, however, the possible hypotheses also include those that are not correct. They comprise for instance only random intersection points of bearing lines at which no target object is present. An intersection point need not necessarily be a discrete point in space but can instead define a limited spatial region through which multiple bearing lines run. In the identification of correct hypotheses, intersection points could be analysed successively in order to be able to eliminate incorrect hypotheses.

In one advantageous embodiment, during the step-by-step elimination, a most probable position of an emitter is respectively ascertained iteratively from all hypotheses, and subsequently all hypotheses that belong to intersection points of bearing lines that run through the ascertained most probable position of the emitter and lie outside the most probable position are eliminated, wherein the step-by-step elimination is repeated until no further hypotheses other than the respectively selected most probable positions remain. As mentioned above, the bearing lines generated from the individual direction-finding measurement results can yield many intersection points at which no target objects are present. During the elimination, the hypotheses, i.e. in particular the generated intersection points, could initially be provided with a ranking, wherein the intersection points having the greatest number of affected bearing lines receive the highest rank. In a first step after the selection of the intersection point with the highest rank, all bearing lines running through this intersection point could be eliminated, because they can be assigned with very high probability to the most probable hypothesis. Therefore, all hypotheses in which the affected bearing lines only coincidentally also form intersection points with other bearing lines are thus eliminated. From the remaining hypotheses and bearing lines, this selection and elimination is progressively repeated until finally no further hypotheses remain. The most probable hypotheses selected in each of the evaluation steps consequently form the positions of the target objects captured by the direction-finding measurements.

In one advantageous embodiment, the collection, ascertainment, combinatorial multiplication, addition and step-by-step elimination are repeated as soon as a new direction-finding measurement from at least one of the observers is present. An ascertainment of positions of target objects can thereby be constantly refined. The method could also run continuously, in particular in real time. When new direction-finding measurement results are provided, they can be fed directly into the process in order to take the most up-to-date direction-finding measurement results into account immediately "on the fly".

In one advantageous embodiment, the method further comprises estimating a movement of at least one of the emitters based on changes over time of correspondingly ascertained positions. If the method is carried out sufficiently rapidly, changes of estimated target object positions over time can be captured. This captured movement is represented by position changes between two successive runs of the method. From knowledge of the time interval between two successive positions, a speed in at least one spatial direction can be ascertained. From a larger number of positions and time intervals of the same target object, the acceleration thereof can also be ascertained. From the speed and acceleration in at least one spatial direction, a dynamic model of the target object could be formed, which then makes it possible to estimate a future movement of the target object in question. A display unit could then, for example, indicate a possible movement track of the target object, which could likewise have a certain fuzziness and then be shown with a specific probability distribution.

In one advantageous embodiment, the observers are selected from a group of observers, the group comprising: stationary observers, terrestrial vehicles, watercraft, aircraft, and spacecraft. The method allows the generation of the illustrated hypotheses from any desired data sources in order to subject them to a plausibility check. As mentioned above, different observers can then lead to different weighting factors depending on the target object.

In one advantageous embodiment, the observers transmit data on direction-finding measurements one time, repeatedly or continuously to an evaluation unit. It is conceivable that direction-finding measurements are carried out continuously, in particular, if the target objects in question have dynamic positions. If it is assumed that target objects are stationary, a repeated partial measurement could make sense in order to detect at defined time intervals whether a position changes. The greater the number of direction-finding measurements and the more frequently these are carried out, the greater the probability that the captured positions of the target objects are correct.

The method could further comprise: collecting a priori information that can be taken into account when ascertaining the geometric probability distribution of bearings of emitters. Such information can relate, for instance, to terrain information or other information that has been ascertained prior to the actual performance of the method. Reflections or attenuation of electromagnetic signals could be predicted and taken into account accordingly.

The invention additionally relates to a system for determining positions of emitters from target objects, each emitting electromagnetic signals, by spatially distributed observers, the system comprising multiple receivers for receiving the electromagnetic signals, and at least one evaluation unit, wherein the receivers can be integrated into the observers and are designed to carry out direction-finding measurements with respect to at least a part of the emitters in order to obtain a respective direction-finding measurement result, wherein the evaluation unit is designed to collect direction-finding measurement results from the receivers, and wherein the evaluation unit is designed, for each receiver, to ascertain a respective geometric probability distribution of bearings of emitters from the direction-finding measurement results of all receivers in order to form a respective partial map for each of the receivers; to multiply the partial maps combinatorially in order to generate a plurality of possible hypotheses of positions of the emitters; to add up all generated hypotheses with a respective weighting to form an overall map in order to obtain a marginalized probability distribution that takes all hypotheses into account; and to eliminate hypotheses that are incompatible with the marginalized probability distribution step by step in order to generate a result map.

In one advantageous embodiment, at least one group of receivers is designed to receive electromagnetic signals of the same type, wherein the evaluation unit is designed to form the marginalized probability distribution from direction-finding measurement results of the observers separately for each of the at least one group of receivers.

In one advantageous embodiment, the observers each comprise a communication unit for transmitting the direction-finding measurement results to the evaluation unit. By means of the communication unit for example, an observer can establish a radio link or a wired connection to the evaluation unit so that the latter can collect the direction-finding measurement results. It is additionally advantageous if the direction-finding measurement results are each identified with time information so that the direction-finding measurement results can be synchronized with one another during the evaluation.

In one advantageous embodiment, the system further comprises a display unit that can be coupled to the evaluation unit and is designed to display the result map. The display unit can be combined for instance with a computing unit that provides a user interface on the display unit, on which the result map or multiple result maps superimposed on one another can be displayed. Furthermore, additional information and selection possibilities, which can be selected or adjusted by a user, can be provided.

Brief description of the figures

Exemplary embodiments will be discussed in greater detail below with reference to the appended drawings. The representations are schematic and not true to scale. Identical reference signs relate to identical or similar elements. In the drawings:

Figure 1 shows a schematic representation of a method in accordance with one exemplary embodiment.

Figures 2a-2d show an exemplary sequence of step-by-step elimination with reference to the representation of bearing lines.

Figure 3          shows a result map in different variants.

Figure 4          shows a system in accordance with one exemplary embodiment.

Detailed description of exemplary embodiments

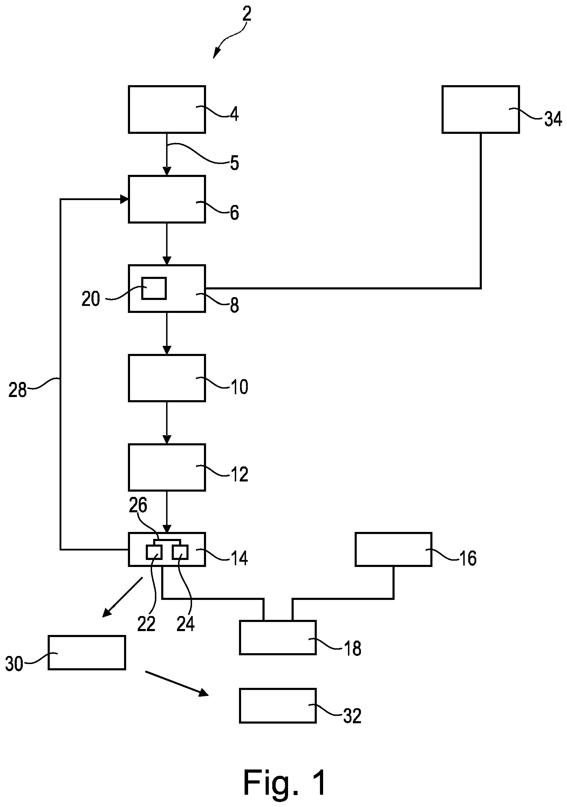

Figure 1 shows a schematic block-based representation of a method 2 according to the invention for determining positions of n emitters from target objects, each emitting electromagnetic signals, by m spatially distributed receivers of observers, each receiving at least a part of the emitted electromagnetic signals. Initially, direction-finding measurements are carried out 4 by each of the receivers with respect to at least a part of the emitters in order to obtain a respective direction-finding measurement result. This can comprise using a directional or direction-finding antenna that is stationary or rotatable. The observers transmit 5 data on direction-finding measurements one time, repeatedly or continuously to an evaluation unit. All direction-finding measurement results are collected 6 by the evaluation unit, which is present in one of the observers or is constructed externally. In a computing unit situated in one of the observers or in the external evaluation unit, a respective geometric probability distribution of bearings of emitters is ascertained 8 for each receiver from the collected direction-finding measurement results in order to form a respective partial map for each of the receivers The partial maps are combinatorially multiplied 10 in order to generate a plurality of possible hypotheses of positions of the emitters therefrom. All generated hypotheses are added up 12 having been provided with a respective weighting to form an overall map in order to obtain a marginalized probability distribution that takes all hypotheses into account. Finally, hypotheses that are incompatible with the marginalized probability distribution are eliminated 14 step-by-step so that a result map results. The method 2 can generate 16 a respective result map for multiple emitters of multiple types, which maps are selectively overlaid 18 so that the multiple result maps can be displayed jointly to a user.

The partial maps can each comprise bearing lines which are formed 20 from the direction-finding measurement results of the receivers and are directed to at least a part of the emitters. This can be a portion of method step 8. The possible hypotheses ascertained in method step 10 accordingly represent intersection points of all bearing lines with one another. During the step-by-step-elimination 14, a most probable position of an emitter is respectively ascertained 22 iteratively from all hypotheses, and subsequently all hypotheses that belong to intersection points of bearing lines that run through the ascertained most probable position of the emitter and lie outside the most probable position are eliminated 24. The step-by-step elimination 14 is repeated 26 until no further hypotheses other than the respective selected most probable positions remain. The collection 6, ascertainment 8, combinatorial multiplication 10, addition 12 and step-by-step elimination 14 are repeated 28 as soon as a new direction-finding measurement is available from at least one of the observers.

The method 2 can further comprise estimating 30 a movement of at least one of the emitters based on changes over time of corresponding ascertained positions. The result can be displayed 32 in the form of at least one result map. Furthermore, the method 2 can comprise the collection 34 of a priori information that can be taken into account when ascertaining the geometric probability distribution 8. This information can relate, for instance, to terrain information or other information that has been ascertained prior to the actual performance of the method 2 and can be used in a statistical measurement model.

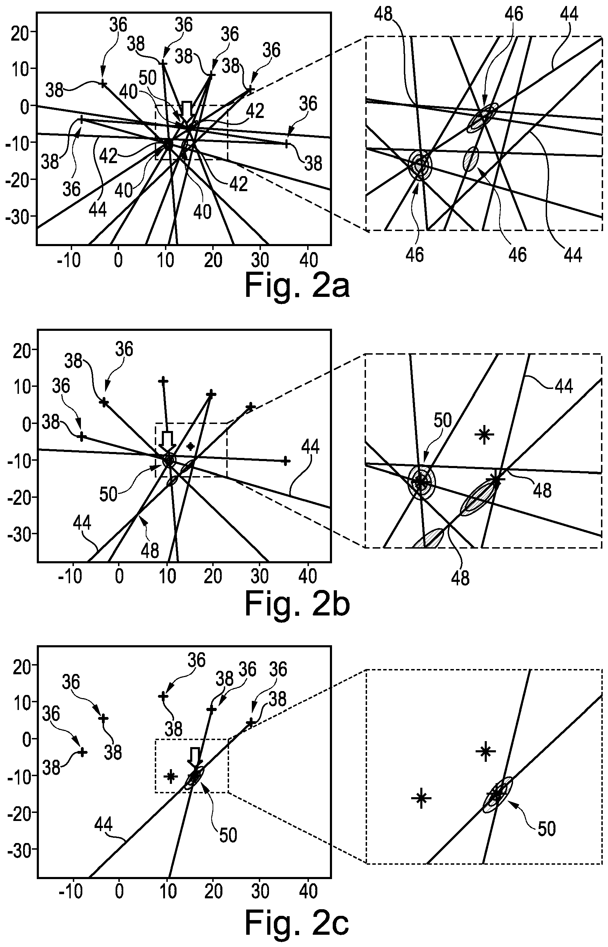

Figures 2a-2d explain a sequence of the step-by-step elimination (method step 14 illustrated above) on the basis of the representation of bearing lines. Figure 2a shows multiple observers 36, by way of example each having a respective receiver 38. Observers 36 comprising more than one receiver 38 are of course conceivable. By way of example, three target objects 40 are present, which likewise as an example each have a respective transmitter 42. The receivers 38, each equipped with a direction-finding antenna or the like, carry out direction-finding measurements and generate a respective bearing line 44 as the direction-finding measurement result.

In an enlarged representation, intersection points 46 that coincide with the actual positions of the target objects 40 can be recognized. Because multiple receivers 38 generate a respective bearing line 44 with respect to each of the transmitters 42 in the exemplary representation, intersection points 48 at which no target object 40 is present are also formed. The totality of all intersection points 46 and 48, as explained above, form all the conceivable hypotheses. The representation in Figure 2a could consequently represent a marginalized probability distribution in which all conceivable intersection points, and consequently hypotheses, are shown.

In a first step, one of the intersection points 46 or 48, at which a target object 40 is most probably present, is selected. It is designated as the intersection point 50 through which the most bearing lines 44 run or are at the smallest possible distance from one another. All the bearing lines 44 that run through this intersection point 50 are then eliminated. The bearing lines 44 used to form this intersection point 50 are consequently removed so that all further intersection points 48 that are formed randomly with these bearing lines 44 and do not coincide with a target object 40 are removed. The additional intersection points 48 originating therefrom are removed. The result for this is shown in Figure 2b.

There, an intersection point 50 which most probably belongs to a target object 40 is again formed - analogously to the representation in Figure 2a. In that case, too, all bearing lines 44 that correlate with this intersection point 50 are removed. This yields the representation in Figure 2c.

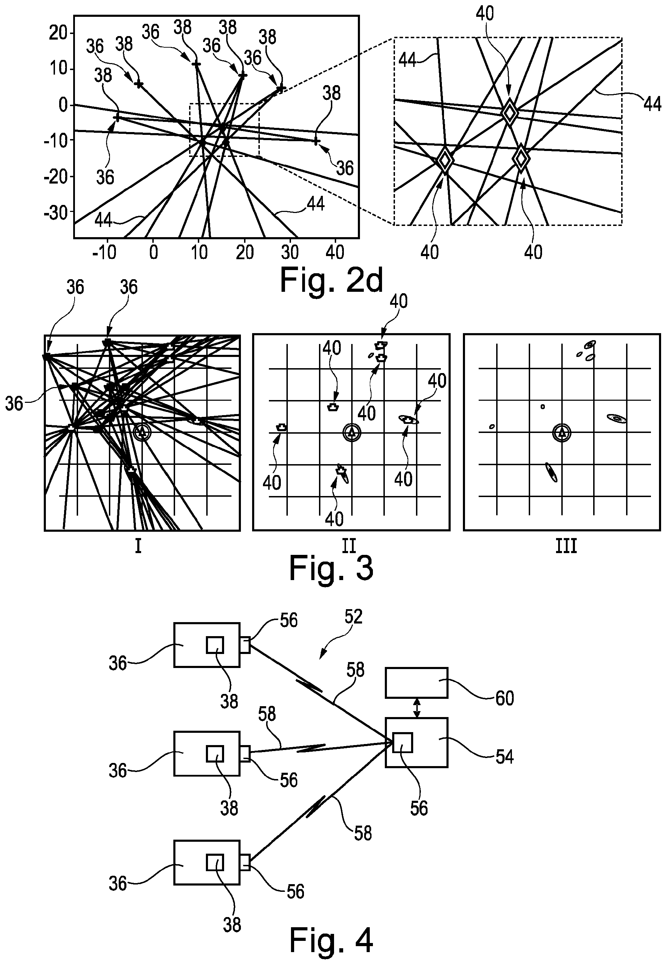

The intersection point 50 with the greatest probability is again selected and all affected bearing lines 44 are again removed. Finally, no more bearing lines 44 are present and the correct hypotheses are identified in the manner of a heat map in Figure 2d.

An additional example having multiple receivers 38 and target objects 40 is represented in Figure 3, wherein partial Figure I shows all bearing lines 44, analogously to Figure 2a, partial Figure II shows a result map having target objects 40 represented by symbols, and partial Figure III shows possible positions of the target objects 40 in the form of tracks coloured differently, depending on the respective probability distribution.

Figure 4 shows a system 52 for determining positions of emitters 42 from target objects 40, each emitting electromagnetic signals, by the spatially distributed observers 38. The system 52 has multiple receivers 38 for receiving the electromagnetic signals and, by way of example, an evaluation unit 54 designed to be separate from the observers 36. As set forth above, the receivers 38 can be integrated into the observers 36, which can be designed, for example, as stationary observers, terrestrial vehicles, watercraft, aircraft, and spacecraft. The evaluation unit 54 is coupled to the observers 36 by a communication unit 56 in the observers 36 and by a communication unit 56 in the evaluation unit 54 in order to establish a communication link 58. Consequently, the evaluation unit 54 can then collect direction-finding measurement results from the receivers 38.

As set forth above, the evaluation unit 54 is designed to carry out the method according to the invention. It is consequently designed, for each receiver 38, to ascertain a respective geometric probability distribution of bearings of emitters 42 from the direction-finding measurement results of all receivers 38 in order to form a respective partial map for each of the receivers 38; to multiply the partial maps combinatorially in order to generate a plurality of possible hypotheses of positions of the emitters 42; to add up all generated hypotheses with a respective weighting to form an overall map in order to obtain a marginalized probability distribution that takes all hypotheses into account; and to eliminate hypotheses that are incompatible with the marginalized probability distribution step by step in order to generate a result map. The map could be designed as a heat map, in which different probabilities are represented by different colours and/or shading. The evaluation unit 54 can be coupled to a display unit 60 which is designed to display the result map.

It should additionally be pointed out that "comprising" or "having" does not exclude other elements or steps, and "a" or "an" does not exclude a plurality. It should further be pointed out that features or steps that have been described with reference to one of the exemplary embodiments above can also be used in combination with other features or steps of other exemplary embodiments described above. Reference signs in the claims are not to be considered limiting.

List of reference signs

| 2 | Method |
|---|---|
| 4 | Performance of direction-finding measurement |
| 5 | Transmission |
| 6 | Collection of direction-finding measurement results |
| 8 | Ascertainment of geometric probability distribution |
| 10 | Combinatorial multiplication |
| 12 | Addition of hypotheses |
| 14 | Eliminating hypotheses step-by-step |
| 16 | Generation of result map |
| 18 | Selective overlaying |
| 20 | Formation of bearing lines |
| 22 | Ascertainment of most probable position |
| 24 | Elimination of bearing lines |
| 26 | Repetition of elimination 24 |
| 28 | Repetition of steps 6, 8, 10, 12 and 14 |
| 30 | Estimation of movement of an emitter |
| 32 | Displaying |
| 34 | Collection of a priori information |
| 36 | Observer |
| 38 | Receiver |
| 40 | Target object |
| 42 | Transmitter |
| 44 | Bearing line |
| 46 | Intersection point (target object present) |
| 48 | Intersection point (target object absent) |
| 50 | Intersection point (most probably target object) |
| 52 | System |
| 54 | Evaluation unit |
| 56 | Communication unit |
| 58 | Communication link |
| 60 | Display unit |

**Claims**

1. Method (2) for determining positions of n emitters (42) from target objects (40), each emitting electromagnetic signals, by m spatially distributed receivers (38) of observers (36), each receiving the electromagnetic signals, the method (2) comprising:

   - carrying out (4) direction-finding measurements by each of the receivers (38) with respect to at least a part of the emitters (42) in order to obtain a respective direction-finding measurement result,
   - collecting (6) the direction-finding measurement results by one of the observers (36) or an external evaluation unit (54),
   - ascertaining (8) for each receiver (38) a respective geometric probability distribution of bearings of emitters (42) from the direction-finding measurement results of all receivers (38) in order to form a respective partial map for each of the receivers (38),
- combinatorially multiplying (10) the partial maps in order to generate a plurality of possible hypotheses of positions of the emitters (42),
- adding up (12) all generated hypotheses with a respective weighting to form an overall map in order to obtain a marginalized probability distribution that takes all hypotheses into account, and
- eliminating (14), step-by-step, hypotheses that are incompatible with the marginalized probability distribution in order to generate a result map.

2. Method (2) according to Claim 1, wherein the marginalized probability distribution is formed from direction-finding measurements with respect to emitters (42) of the same type.

3. Method (2) according to Claim 2,

wherein the method (2) generates a respective result map for emitters (42) of multiple types, and wherein the multiple result maps are selectively overlaid so that the multiple result maps can be displayed jointly to a user.

4. Method (2) according to one of the preceding claims,

wherein the partial maps each comprise bearing lines (44) which are formed from the direction-finding measurement results of the receivers (38) and are directed to at least a part of the emitters (42), and wherein the possible hypotheses comprise intersection points (46, 48, 50) of all bearing lines (44) with one another.

5. Method (2) according to Claim 4,

wherein, during the step-by step-elimination, a most probable position of an emitter (42) is respectively ascertained iteratively from all hypotheses, and subsequently all hypotheses that belong to intersection points of bearing lines that run through the ascertained most probable position of the emitter (42) and lie outside the most probable position are eliminated, and wherein the step-by-step elimination is repeated until no further hypotheses other than the respectively selected most probable positions remain.

6. Method (2) according to one of the preceding claims,

wherein the collection, ascertainment, combinatorial multiplication, addition and step-by-step elimination are repeated as soon as a new direction-finding measurement from at least one of the observers (36) is present.

7. Method (2) according to one of the preceding claims, further comprising estimating a movement of at least one of the emitters (42) based on changes over time of corresponding ascertained positions.

8. Method (2) according to one of the preceding claims, wherein the observers (36) are selected from a group of observers (36), the group comprising:

- stationary observers (36),
- terrestrial vehicles,
- watercraft,
- aircraft, and
- spacecraft.

9. Method (2) according to one of the preceding claims, wherein the observers (36) transmit data on direction-finding measurements one time, repeatedly or continuously to an evaluation unit (54).

10. Method (2) according to one of the preceding claims, further comprising collecting (34) a priori information that can be taken into account when ascertaining (8) the geometric probability distribution of bearings of emitters (42).

11. System (52) for determining positions of emitters (42) from target objects (40), each emitting electromagnetic signals, by spatially distributed observers (36), the system (52) comprising:

- multiple receivers (38) for receiving the electromagnetic signals, and
- at least one evaluation unit (54),

wherein the receivers (38) can be integrated into the observers (36) and are designed to carry out direction-finding measurements with respect to at least a part of the emitters (42) in order to obtain a respective direction-finding measurement result, wherein the evaluation unit (54) is designed to collect direction-finding measurement results from the receivers (38), and wherein the evaluation (54) unit is designed, for each receiver (38), to ascertain a respective geometric probability distribution of bearings of emitters (42) from the direction-finding measurement results of all receivers (38) in order to form a respective partial map for each of the receivers (38); to multiply the partial maps combinatorially in order to generate a plurality of possible hypotheses of positions of the emitters (42); to add up all generated hypotheses with a respective weighting to form an overall map in order to obtain a marginalized probability distribution that takes all hypotheses into account; and to eliminate hypotheses that are incompatible with the marginalized probability distribution step by step in order to generate a result map.

12. System (52) according to Claim 11,

wherein at least one group of receivers (38) is designed to receive electromagnetic signals of the same type, and
wherein the evaluation unit (54) is designed to form the marginalized probability distribution from direction-finding measurement results of the observers (36) separately for each of the at least one group of receivers (38).

13. System (52) according to Claim 11 or 12, wherein the observers (36) each comprise a communication unit (56) for transmitting the direction-finding measurement results to the evaluation unit (54).

14. System according to one of Claims 11 to 13, further comprising a display unit (60) that can be coupled to the evaluation unit (54) and is designed to display the result map.

Fig. 1

Fig. 2a

Fig. 2b

Fig. 2c

Fig. 2d

Fig. 3

Fig. 4

Europäisches
Patentamt
European
Patent Office
Office européen
des brevets

# EUROPEAN SEARCH REPORT

Application Number

EP 23 15 7435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 045 860 A (HODSON ERIC S [US]) 3 September 1991 (1991-09-03) | 1-4,6-14 | INV. G01S3/02 G01S5/02 G01S5/04 |
| Y | * figures 2-6 * * column 6, line 7 - line 34 * * column 7, line 67 - column 8, line 34 * * column 9, line 43 - line 48 * * column 11, line 1 - line 37 * * column 10, line 9 - line 16 * * column 13, line 7 - column 14, line 59 * * column 16, line 19 - line 22 * * column 16, line 34 - line 46 * ----- | 5 | |
| Y | US 2016/334498 A1 (JAMIESON KYLE [GB] ET AL) 17 November 2016 (2016-11-17) * paragraphs [0131], [0132] * ----- | 5 | |

TECHNICAL FIELDS
SEARCHED        (IPC)

G01S

The present search report has been drawn up for all claims

| Place of search | Date of completion of the search | Examiner |
|---|---|---|
| Munich | 12 June 2023 | Chindamo, Gregorio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 15 7435

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2023

| Patent document cited in search report | | Publication date | Patent family member(s) | | Publication date |
|---|---|---|---|---|---|
| US 5045860 | A | 03-09-1991 | US | 5045860 A | 03-09-1991 |
| | | | WO | 9200528 A1 | 09-01-1992 |
| US 2016334498 | A1 | 17-11-2016 | EP | 3100069 A1 | 07-12-2016 |
| | | | US | 2016334498 A1 | 17-11-2016 |
| | | | WO | 2015114313 A1 | 06-08-2015 |

EPO FORM P0459

For more details about this annex : see Official Journal of the European Patent Office, No. 12/82

**EP 4 235 203 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004164902 A1
- US 2010138184 A1